# EUROPÄISCHE PATENTANMELDUNG

(11) **EP 4 556 197 A1**
(43) Veröffentlichungstag der Anmeldung: **21.05.2025**
(21) Anmeldenummer: 24184152.7
(22) Anmeldetag: 25.06.2024
(51) Int. Cl.: B29C 49/78, G01N 21/00, G05B 15/00, B29C 49/42, B29K 67/00, B29L 31/00, B29C 45/76, B29C 49/24, B29C 49/64

(54) **VERFAHREN ZUM REGELN EINER BEHÄLTERBEHANDLUNGSANLAGE UND VOR-RICHTUNG UMFASSEND EINE BEHÄLTERBEHANDLUNGSANLAGE UND EINE REGELVORRICHTUNG ZUM AUSFÜHREN DES VERFAHRENS**

(30) Priorität: 15.11.2023 DE 102023131854
(71) Anmelder: Krones AG, 93073 Neutraubling (DE)
(72) Erfinder: BOETTCHER, Benedikt, 93073 Neutraubling (DE); ZOELFL, Markus, 93073 Neutraubling (DE); STEINER, Andreas, 93073 Neutraubling (DE); AUST, Robert, 93073 Neutraubling (DE)
(74) Vertreter: Grünecker Patent- und Rechtsanwälte PartG mbB

(57) **Zusammenfassung**

Die Erfindung betrifft ein Verfahren zum Regeln einer Behälterbehandlungsanlage, beispielsweise einer Blasformmaschine (7), zum Herstellen von Behältern aus Preforms, wobei das Verfahren umfasst: ein Bereitstellen eines Hauptagenten (3) umfassend eine Mehrzahl von Teilagenten (4, 5, 6), wobei jeder Teilagent (4, 5, 6) einem Behältertyp oder einer Preform zugeordnet ist, wobei pro Teilagent (4, 5, 6) ein Soll-Parametersatz für das Regeln der Behälterbehandlungsanlage und eine Gruppe von Sollwerten für eine Regelgröße bereitgestellt wird, ein Durchführen einer Bestimmung einer Charakteristik einer Preform, ein Auswerten eines Ergebnisses (2) der Bestimmung und automatisches Auswählen eines entsprechenden Teilagenten (4, 5, 6) der Mehrzahl von Teilagenten (4, 5, 6) basierend auf dem Auswerten und ein Verwenden des entsprechenden Teilagenten (4, 5, 6) für das Regeln der Behälterbehandlungsanlage. Weiter betrifft die Erfindung eine Vorrichtung umfassend eine Behälterbehandlungsanlage und eine Regelvorrichtung zum Ausführen des Verfahrens.

## Beschreibung

Die Erfindung betrifft ein Verfahren zum Regeln einer Behälterbehandlungsanlage und eine Vorrichtung umfassend eine Behälterbehandlungsanlage und eine Regelvorrichtung zum Ausführen des Verfahrens gemäß den unabhängigen Ansprüchen.

### Stand der Technik

Es ist bekannt, für jede Kombination aus PET-Preform und PET-Behälter eine eigene statistische Versuchsplanung, DoE (Design of Experiment), durchzuführen. In der statistischen Versuchsplanung können die Grundlagen für ein Agententraining für die entsprechende Kombination aus PET-Preform und PET-Behälter geschaffen werden. Der Agent kann trainiert werden und alle Parametereinstellung für die Blasformmaschine lernen sowie deren Auswirkungen für diese entsprechende Kombination aus PET-Preform und PET-Behälter, um diese später verwenden zu können.

### Aufgabe

Die Aufgabe der Erfindung ist es, ein Verfahren zum Regeln einer Behälterbehandlungsanlage und eine Vorrichtung umfassend eine Behälterbehandlungsanlage und eine Regelvorrichtung zum Ausführen des Verfahrens zur Verfügung zu stellen, die eine effiziente Nutzung eines Agenten für eine Parametereinstellung einer Behälterbehandlungsanlage ermöglichen können.

### Lösung

Die Aufgabe wird gelöst durch das Verfahren zum Regeln einer Behälterbehandlungsanlage und die Vorrichtung umfassend eine Behälterbehandlungsanlage und eine Regelvorrichtung zum Ausführen des Verfahrens gemäß den unabhängigen Ansprüchen. Weitere Ausführungsformen sind in den Unteransprüchen offenbart.

Das erfindungsgemäße Verfahren zum Regel einer Behälterbehandlungsanlage zum Herstellen von Behältern, beispielsweise von PET-Behältern oder von Fasern umfassenden Behältern, aus Preforms, beispielsweise PET-Preforms oder Fasern umfassenden Preforms, umfasst ein Bereitstellen eines Hauptagenten umfassend eine Mehrzahl von Teilagenten, wobei jeder Teilagent einem Behältertyp oder einer Preform zugeordnet ist wobei pro Teilagent ein Soll-Parametersatz für das Regeln der Behälterbehandlungsanlage und eine Gruppe von Sollwerten für eine Regelgröße bereitgestellt wird, ein Durchführen einer Bestimmung einer Charakteristik einer Preform, ein Auswerten eines Ergebnisses der Bestimmung und automatisches Auswählen eines entsprechenden Teilagenten der Mehrzahl von Teilagenten basierend auf dem Auswerten und ein Verwenden des entsprechenden Teilagenten für das Regeln der Behälterbehandlungsanlage.

Die Behälterbehandlungsanlage kann eine Vorrichtung zum Herstellen von Preformen, beispielsweise eine Spritzgussmaschine, eine Heizvorrichtung für Preformen, eine Streck-Blasmaschine, ein Füller und/oder weitere Einheiten der kompletten Linie, wie beispielsweise Rinser, Etikettierer, sein oder umfassen.

Die Preforms können mit einer Maschine zum Herstellen von Preforms hergestellt werden, beispielsweise mit einer Spritzgussmaschine.

Eine Regelgröße kann eine Wanddicke, eine Lichttransmission und/oder einen für eine Geometrie eines Behälterbodens charakteristischen Werte umfassen.

Für die Lichttransmission kann ein Transmissionswert und/oder Transmissionsgrad für elektromagnetische Strahlung gemessen werden. Beispielsweise kann Licht oder Infrarot verwendet werden.

Die Wanddicke kann eine Wanddicke des Behälters sein.

Als ein Teilagent kann ein Programm in der künstlichen Intelligenz, Kl, angesehen werden, das Entscheidungen treffen oder auch einen Dienst ausführen kann, basierend hierbei auf dem Ergebnis der Infrarot-Absorptionsmessung.

Der Teilagent kann autark die Behälterbehandlungsanlage regeln. Für eine Auswahl des richtigen Teilagenten können eine Charakteristik oder mehrere Charakteristika der Preformen und/oder der Behälter verwendet werden.

Die KI kann den Heiz- und Blasprozess regeln. Beispielsweise können Lichttransmissionsgrade als gemessene Größen der hergestellten Behälter durch den Teilagenten durch Regelentscheidungen an Sollwerte angepasst werden. Zur Regelung kann ein Vorblaszeitpunkt herangezogen werden, beispielsweise können zudem ein Vorblasdruck und/oder Heizzoneneinstellungen herangezogen werden.

Durch das Vorsehen der Mehrzahl von Teilagenten im Hauptagenten ist eine flexible Regelung der Behälterbehandlungsanlage für verschiedene Preforms möglich, die durch entsprechende Teilagenten berücksichtigt werden können.

Ein Hauptagent kann als eine Vielzahl von Teilagenten angesehen werden, wobei aus der Vielzahl ein Teilagent ausgewählt werden kann, der am besten an eine Charakteristik oder mehrere Charakteristika der Preformen und/oder der Behälter angepasst ist.

Die Behälter können Flaschen sein.

Die Bestimmung der Charakteristik kann das Bestimmen einer einzigen Charakteristik der Preform oder mehreren Charakteristika der Preform umfassen. Beim Bestimmen mehrerer Charakteristika kann eine Art von Messung oder können verschiedene Arten von Messungen verwendet werden. Die Art von Messung kann eine Infrarot-Absorptionsmessung oder eine Kameraaufnahme (Bild, Bilder oder Video) sein.

Das Durchführen der Bestimmung der Charakteristik einer Preform kann mit einer Messung wie beispielsweise mit einer Infrarot-Absorptionsmessung erfolgen. Zudem kann eine Messung mittels einer Kamera erfolgen, die ein oder mehrere Bilder oder eine Bildsequenz (wie beispielsweise ein Video) aufnehmen kann. Die Bestimmung der Charakteristik der Preform kann online oder offline durchgeführt werden.

Durch das Verwenden des entsprechenden Teilagenten für das Regeln der Behälterbehandlungsanlage kann für die Preform, für die die Charakteristik bestimmt wurde, kann ein optimales Ergebnis für den aus der Preform in der Behälterbehandlungsanlage hergestellten Behälter erreicht werden

Das Ergebnis der Bestimmung der Charakteristik der Preform kann mindestens eines umfassen von:
- einer Zusammensetzung der Preform, wie beispielsweise ein Anteil von recyceltem Material und/oder ein Anteil von neuem Material,
- einer geometrischen Form der Preform,
- einen Code auf der Preform, wobei beispielsweise der Code in einer Spritzgussform für ein Herstellen der Preform auf der Preform angeordnet wurde,
- einen Barcode auf der Preform, wobei beispielsweise der Barcode einen Rückschluss auf eine Charge ermöglicht, aus der die Preform stammt,
- einen Hersteller der Preform,
- einen Infrarot-Absorptionsgrad der Preform,
- einen Feuchtegehalt der Preform,
- einer Masse der Preform,
- Temperaturen an verschiedenen Stellen der Preform.

Eine Infrarot-Absorptionsmessung kann zum Beispiel für die Bestimmung der Zusammensetzung der Preform, als eine Charakteristik, verwendet werden.

Die geometrische Form und/oder der Code, und/oder der Barcode können mit einer Kamera bestimmt werden. Der Hersteller der Preform kann aus einer Prozessdatenbank ausgelesen werden, in der der Hersteller einer Preform hinterlegt sein kann.

Das Durchführen der Bestimmung der Charakteristik einer Preform kann in einer Zuführvorrichtung der Preform und/oder vor einem Erhitzen der Preform erfolgen. Die Zuführvorrichtung kann eine nach unten geneigte Führungsrinne für die Preformen umfassen. Beispielsweise kann das Durchführen der Bestimmung der Charakteristik einer Preform in einem Zuführstern, beispielsweise in einem Sägezahnstern, vor einem Ofen erfolgen.

Alternativ kann das Durchführen der Bestimmung der Charakteristik einer Preform in einer Maschine zum Herstellen der Preforms, beispielsweise in einer Spritzgussmaschine, oder zwischen der Maschine zum Herstellen der Preforms und einer Streckblasmaschine erfolgen.

Ein Behältertyp kann festgelegt sein durch mindestens eines von:
- einer Volumengröße des Behälters,
- einem Gewicht des Behälters,
- einer Zusammensetzung des Behälters, wie beispielsweise einen Anteil von recyceltem Material und/oder einen Anteil von neuem Material,
- einer geometrischen Form des Behälters,
- einer am Behälter anzuordnenden Verschlussart,
- durch ein in den Behälter abzufüllendes Produkt,
- durch ein auf dem Behälter anzuordnendes Etiketts.

Das Durchführen der Infrarot-Absorptionsmessung einer Preform kann mittels eines Infrarot-Absorptionswertsensors erfolgen. Zusätzlich kann mittels einer Infrarot-Technologie eine Messung des Feuchtegehalts einer Preform erfolgen.

Mindestens zwei der Teilagenten können jeweils basierend auf einer statistischen Versuchsplanung, DoE (Design of Experiment), erstellt worden sein.

Ein weiterer Teilagent kann durch eine Kombination von mindestens zwei der statistischen Versuchsplanungen erstellt und zu der Mehrzahl von Teilagenten hinzugefügt werden.

Durch die Kombination verschiedener statistischer Versuchsplanungen kann erreicht werden, dass eine neue statistische Versuchsplanung nur noch für nicht bekannte Aspekte eines neuen Behältertyps durchzuführen ist. Beispielsweise können der Hauptagent bzw. die Teilagenten in einer Artificial Intelligence (AI) verwendet werden, die nicht nur einen Streckblasprozess regelt, sondern auch den Herstellungsprozess der Preform in einer Maschine zum Herstellen von Preformen. Die Maschine zum Herstellen von Preformen kann eine Spritzgussmaschine umfassen und der Herstellungsprozess kann ein Spritzgussprozess sein.

Der Soll-Parametersatz kann mindestens eines umfassen von:
- einen Vorblasstartzeitpunkt,
- einen Blasdruck oder eine zeitliche Abhängigkeit des Blasdrucks,
- einen Reckzeitpunkt eines Reckvorgangs einer Preform mit einer Reckstange,
- einen Temperaturverlauf eines Ofens,
- einen gegebenen Sollwertverlauf einer Wanddicke und/oder Lichttransmission.

Der Ofen kann ein IR-Ofen (Infrarot-Ofen), ein Mikrowellen-Ofen oder ein Laser-Ofen sein oder umfassen. Der Ofen kann für ein Erhitzen der Preformen vorgesehen sein.

Soll-Parameter des Ofens, die im Soll-Parametersatz umfasst sein können, können umfassen:
- Leistung IR-Strahler (im IR- Ofen),
- Kühlung im Ofen (im IR-Ofen),
- Positionen der Schieberelemente (im Mikrowellenofen).

Weiter ist eine Vorrichtung umfassend eine Behälterbehandlungsanlage und eine Regelvorrichtung zum Ausführen des Verfahrens, wie oben oder weiter unten beschrieben, vorgesehen.

Die Vorrichtung kann weiter eine Zuführvorrichtung für Preformen umfassen. Die Zuführvorrichtung kann eine nach unten geneigte Führungsrinne für die Preformen umfassen.

Die Vorrichtung kann weiter einen Infrarot-Absorptionswertsensor umfassen. Mittels des Infrarot-Absorptionswertsensors kann das Durchführen der Bestimmung der Charakteristik einer Preform erfolgen.

Der Infrarot-Absorptionswertsensor kann in der Zuführvorrichtung angeordnet sein.

Die Vorrichtung kann weiter eine Kamera umfassen. Mittels der Kamera kann das Durchführen der Bestimmung der Charakteristik einer Preform erfolgen.

Die Vorrichtung kann weiter einen Feuchtegehalt-Sensor umfassen.

Der Feuchtegehalt-Sensor kann in der Zuführvorrichtung angeordnet sein.

### Kurze Figurenbeschreibung

Die beigefügte Figur stellt beispielhaft zum besseren Verständnis und zur Veranschaulichung Aspekte und/oder Ausführungsbeispiele der Erfindung dar. Es zeigt:

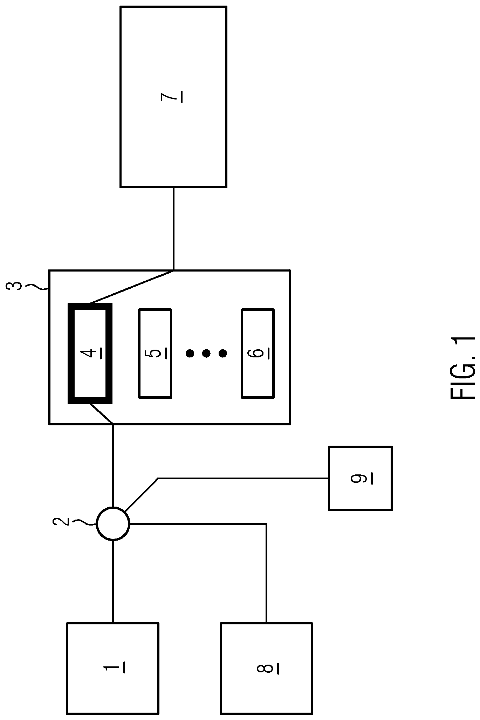

Figur 1 ein Blockschaltbild eines Verfahrens zum Regeln einer Blasformmaschine (7) zum Herstellen von Behältern aus Preforms.

### Ausführliche Figurenbeschreibung

Die Figur 1 zeigt ein Blockschaltbild eines Verfahrens zum Regeln einer Behälterbehandlungsanlage, die hier beispielhaft als eine Blasformmaschine 7 ausgebildet ist, zum Herstellen von Behältern aus Preforms.

Zum Durchführen einer Bestimmung einer Charakteristik einer Preform, die der Blasformmaschine 7 zum Herstellen eines Behälters zugeführt werden soll, sind ein Infrarot-Absorptionswertsensor 1 und eine Kamera 8 vorgesehen. Die Kamera 8 kann ein oder mehrere Bilder oder eine Bildsequenz (wie beispielsweise ein Video) der Preform oder zumindest eines Teils davon aufnehmen. Eine Charakteristik kann hierbei vom Infrarot-Absorptionswertsensor 1 oder vom der Kamera 8 bestimmt werden. Beim Bestimmen mehrerer Charakteristika kann der Infrarot-Absorptionswertsensor 1 und/oder die Kamera 8 verwendet werden. Es kann auch der Hersteller der Preform ermittelt werden, beispielsweise durch Auslesen von entsprechenden Daten aus einer Prozessdatenbank 9, in der Hersteller von Preformen hinterlegt sein können.

Es kann also eine Charakteristik der Preform bestimmt werden, wobei auch mehrere Charakteristika bestimmt werden können. Das Ergebnis 2 der Bestimmung der Charakteristik wird ausgewertet, um automatisch, basierend auf der Charakteristik, einen entsprechenden Teilagenten 4, 5, 6 auswählen zu können. Mittels des Infrarot-Absorptionswertsensor 1 kann eine Charakteristik wie eine Zusammensetzung der Preform, wie beispielsweise ein Anteil von recyceltem Material und/oder ein Anteil von neuem Material, bestimmt werden. Mittels der Kamera 8 kann eine Charakteristik wie eine geometrische Form der Preform, ein Code auf der Preform, wobei beispielsweise der Code in einer Spritzgussform für ein Herstellen der Preform auf der Preform angeordnet wurde, und/oder ein Barcode auf der Preform, wobei beispielsweise der Barcode einen Rückschluss auf eine Charge ermöglicht, aus der die Preform stammt, bestimmt werden.

Um den entsprechenden Teilagenten 4, 5, 6 auswählen zu können, also einen Teilagent 4, 5, 6, der der Charakteristik am nächsten kommt, wird das Ergebnis der Bestimmung einem Hauptagenten 3 zugeführt, der eine Mehrzahl von Teilagenten 4, 5, 6 umfasst. Wie durch die Punkte angedeutet kann der Hauptagent 3 auch mehr als die drei dargestellten Teilagenten 4, 5, 6 umfassen. Jeder der Teilagenten 4, 5, 6 ist einem Behältertyp zugeordnet, wobei pro Teilagent 4, 5, 6 ein Soll-Parametersatz für das Regeln der Blasformmaschine 7 bereitgestellt wird. Der Behältertyp kann eine Volumengröße des Behälters, ein Gewicht des Behälters, eine Zusammensetzung des Behälters, wie beispielsweise einen Anteil von recyceltem Material und/oder einen Anteil von neuem Material, eine geometrische Form des Behälters, eine am Behälter anzuordnende Verschlussart, durch ein in den Behälter abzufüllendes Produkt und/oder durch ein auf dem Behälter anzuordnendes Etiketts angegeben sein. Anhand des Ergebnisses 2 kann der Behältertyp ermittelt werden. Das Ergebnis 2 zusammen mit den Charakteristika der Preform kann erforderlich sein, um einen passenden Soll-Parametersatz für das Regeln der Blasformmaschine 7 auszuwählen, der in einem der Teilagenten 4, 5, 6 hinterlegt sein kann. Die Charakteristika der Behälter können ebenso wie die Charakteristika der Preformen den richtigen Teilagenten bestimmen. Somit können die Charakteristika der Preform und der Behälter in Summe den richtigen Teilagenten bestimmen.

In der Figur 1 wird der erste Teilagent 4 basierend auf dem Ergebnis automatisch ausgewählt; dies ist durch die dickere Linie des Kastens, der den ersten Teilagenten 4 darstellen soll, kenntlich gemacht.

Der erste Teilagent 4 wird für das Regeln der Blasformmaschine 7 verwendet. Der Soll-Parametersatz des ersten Teilagenten 4 kann einen Vorblasstartzeitpunkt und/oder einen Blasdruck oder eine zeitliche Abhängigkeit des Blasdrucks und/oder einen Reckzeitpunkt eines Reckvorgangs einer Preform mit einer Reckstange umfassen. Der Soll-Parametersatz wird dann für die Herstellung des Behälters aus der Preform in der Blasformmaschine 7 verwendet. Es wird somit ein für die Preform passender Soll-Parametersatz verwendet, um als Endprodukt einen gewünschten Behälter nach der Herstellung in der Blasformmaschine 7 zu erhalten.

## Patentansprüche

1. Verfahren zum Regeln einer Behälterbehandlungsanlage, beispielsweise einer Blasformmaschine (7) zum Herstellen von Behältern, beispielsweise von PET-Behältern oder von Fasern umfassenden Behältern, aus Preforms, beispielsweise PET-Preforms oder Fasern umfassenden Preforms, wobei das Verfahren umfasst:
- Bereitstellen eines Hauptagenten (3) umfassend eine Mehrzahl von Teilagenten (4, 5, 6), wobei jeder Teilagent (4, 5, 6) einem Behältertyp oder einer Preform zugeordnet ist, wobei pro Teilagent (4, 5, 6) ein Soll-Parametersatz für das Regeln der Behälterbehandlungsanlage und eine Gruppe von Sollwerten für eine Regelgröße bereitgestellt wird,
- Durchführen einer Bestimmung einer Charakteristik einer Preform, wie etwa mit einer Messung wie einer Infrarot-Absorptionsmessung,
- Auswerten eines Ergebnisses (2) der Bestimmung und automatisches Auswählen eines entsprechenden Teilagenten (4, 5, 6) aus der Mehrzahl von Teilagenten (4, 5, 6) basierend auf dem Auswerten,
- Verwenden des entsprechenden Teilagenten (4, 5, 6) für das Regeln der Behälterbehandlungsanlage.

2. Das Verfahren nach Anspruch 1, wobei das Ergebnis (2) der Bestimmung der Charakteristik der Preform mindestens eines umfasst von:
- einer Zusammensetzung der Preform, wie beispielsweise ein Anteil von recyceltem Material und/oder ein Anteil von neuem Material,
- einer geometrischen Form der Preform,
- einen Code auf der Preform, wobei beispielsweise der Code in einer Spritzgussform für ein Herstellen der Preform auf der Preform angeordnet wurde,
- einen Barcode auf der Preform, wobei beispielsweise der Barcode einen Rückschluss auf eine Charge ermöglicht, aus der die Preform stammt,
- einen Hersteller der Preform,
- einen Infrarot-Absorptionsgrad der Preform,
- einen Feuchtegehalt der Preform,
- einer Masse der Preform,
- Temperaturen an verschiedenen Stellen der Preform.

3. Das Verfahren nach Anspruch 1 oder 2, wobei das Durchführen der Bestimmung der Charakteristik der Preform in einer Zuführvorrichtung der Preform und/oder vor einem Erhitzen der Preform erfolgt.

4. Das Verfahren nach einem der Ansprüche 1 bis 3, wobei ein Behältertyp festgelegt ist durch mindestens eines von:
- einer Volumengröße des Behälters,
- einem Gewicht des Behälters,
- einer Zusammensetzung des Behälters, wie beispielsweise einen Anteil von recyceltem Material und/oder einen Anteil von neuem Material,
- einer geometrischen Form des Behälters,
- einer am Behälter anzuordnenden Verschlussart,
- durch ein in den Behälter abzufüllendes Produkt,
- durch ein auf dem Behälter anzuordnendes Etiketts.

5. Das Verfahren nach einem der Ansprüche 1 bis 4, wobei das Durchführen der Infrarot-Absorptionsmessung einer Preform mittels eines Infrarot-Absorptionswertsensors (1) erfolgt.

6. Das Verfahren nach einem der Ansprüche 1 bis 5, wobei mindestens zwei der Teilagenten (4, 5, 6) jeweils basierend auf einer statistischen Versuchsplanung, DoE, erstellt wurden.

7. Das Verfahren nach Anspruch 6, wobei ein weiterer Teilagent (4, 5, 6) durch eine Kombination von mindestens zwei der statistischen Versuchsplanungen erstellt und zu der Mehrzahl von Teilagenten (4, 5, 6) hinzugefügt wird.

8. Das Verfahren nach einem der Ansprüche 1 bis 7, wobei der Soll-Parametersatz mindestens eines umfasst von:
- einen Vorblasstartzeitpunkt,
- einen Blasdruck oder eine zeitliche Abhängigkeit des Blasdrucks
- einen Reckzeitpunkt eines Reckvorgangs einer Preform mit einer Reckstange,
- einen Temperaturverlauf eines Ofens,
- einen gegebenen Sollwertverlauf einer Wanddicke und/oder Lichttransmission.

9. Vorrichtung umfassend eine Behälterbehandlungsanlage, beispielsweise eine Blasformmaschine (7), und eine Regelvorrichtung zum Ausführen des Verfahrens nach einem der Ansprüche 1 bis 8.

10. Die Vorrichtung nach Anspruch 9, weiter umfassend eine Zuführvorrichtung für Preformen.

11. Die Vorrichtung nach Anspruch 9 oder 10, weiter umfassend einen Infrarot-Absorptionswertsensor (1).

12. Die Vorrichtung nach Anspruch 10 oder 11, wobei der Infrarot-Absorptionswertsensor (1) in der Zuführvorrichtung angeordnet ist.

13. Die Vorrichtung nach einem der Ansprüche 9 bis 12, weiter umfassend eine Kamera.

14. Die Vorrichtung nach einem der Ansprüche 9 bis 13, weiter umfassend einen Feuchtegehalt-Sensor.

15. Die Vorrichtung nach Anspruch 14, wobei der Feuchtegehalt-Sensor in der Zuführvorrichtung angeordnet ist.
